(19) Europäisches Patentamt
European Patent Office
Office européen des brevets

(11) Veröffentlichungsnummer: **0 010 595**
**A1**

# (12) EUROPÄISCHE PATENTANMELDUNG

(21) Anmeldenummer: **79103331.9**

(22) Anmeldetag: **07.09.79**

(51) Int. Cl.³: **C 07 C 147/10,** C 07 C 149/36, C 08 G 18/32, C 08 G 63/12, C 08 G 63/62, C 08 G 65/34, C 08 G 75/20

(30) Priorität: **18.09.78 US 943401**
**18.09.78 US 943515**

(43) Veröffentlichungstag der Anmeldung: **14.05.80**
**Patentblatt 80/10**

(84) Benannte Vertragsstaaten: **DE FR GB IT NL**

(71) Anmelder: **Mobay Chemical Corporation, Patent Department Mobay Chemical Corporation Penn Lincoln Parkway West, Pittsburgh Pennsylvania 15 205 (US)**

(72) Erfinder: **Baron, L. Arthur, 211 East Thistle Court, New Martinsville, W.VA 26155 (US)**
Erfinder: **Sivaramakrishnan, Parameswar, 159 Fairview Drive, New Martinsville, W. VA 26155 (US)**

(74) Vertreter: **Gremm, Joachim, Dr. et al, c/o Bayer AG, Zentralbereich Patente Marken und Lizenzen, D-5090 Leverkusen, Bayerwerk (DE)**

(54) **Bis(4-hydroxyphenylthiophenyl)biphenyldisulfone und Bis(4-hydroxyphenylsulfonylphenyl)-biphenyldisulfone, ihre Herstellung und Verwendung.**

(57) Gegenstand der vorliegenden Erfindung sind neue Bis(4-hydroxyphenylthiophenyl)biphenyldisulfone und Bis-(4-hydroxyphenylsulfonylphenyl)biphenyldisulfone, ihre Herstellung und ihre Verwendung zur Herstellung von Polycarbonaten, Polyurethanen, Polyestern, Polysulfonen und Polyäthern nach bekannten Verfahren.

EP 0 010 595 A1

MOBAY Chemical Corporation

PS/W

Bis(4-hydroxyphenylthiophenyl)biphenyldisulfone und Bis(4-hydroxyphenylsulfonylphenyl)-biphenyldisulfone, ihre Herstellung und Verwendung

Die Erfindung betriffe neue Monomere, die allgemein als Bis(4-hydroxyphenylthiophenyl)biphenyldisulfone bezeichnet werden und die Strukturformel

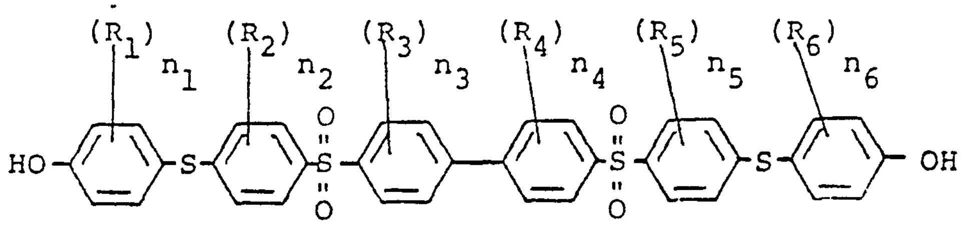

haben, in der $R_1$, $R_2$, $R_3$, $R_4$, $R_5$ und $R_6$, die gleich oder verschieden sein können, für $C_1$-$C_4$-Alkyl, Cl oder Br stehen und $n_1$, $n_2$, $n_3$, $n_4$, $n_5$ und $n_6$, die gleich oder verschieden sein können, für 0, 1 oder 2 stehen, ein Verfahren zu ihrer Herstellung und aus diesen neuen Monomeren hergestellte Polycarbonate, Polyurethane, Polyester, Polysulfone und Polyäther.

Die Bis(4-hydroxyphenylthiophenyl)biphenyldisulfone gemäß der Erfindung haben die allgemeine Strukturformel

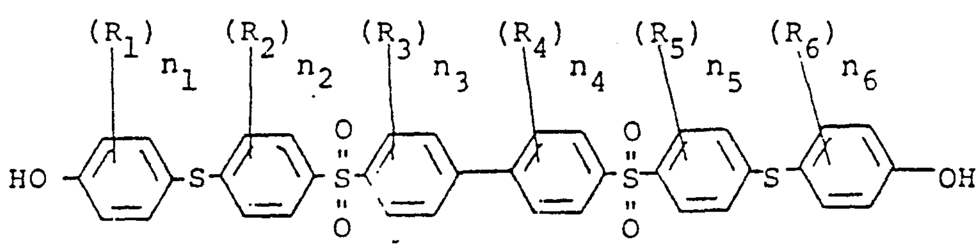

in der $R_1$, $R_2$, $R_3$, $R_4$, $R_5$ und $R_6$, die gleich oder verschieden sein können, für $C_1$-$C_4$-Alkyl, Cl oder Br stehen und $n_1$, $n_2$, $n_3$, $n_4$, $n_5$ und $n_6$, die gleich oder verschieden sein können, für 0, 1 oder 2 stehen.

Ein geeigneter Weg zur Synthese der Bis(4-hydroxyphenylthiophenyl)biphenyldisulfone der vorstehenden Gattung wird durch das folgende allgemeine Reaktionsschema für die Synthese des Bis(4-hydroxyphenylthiophenyl)biphenyldisulfons ($n_1$-$n_6$ = 0), des bevorzugten Monomeren gemäß der Erfindung, veranschaulicht:

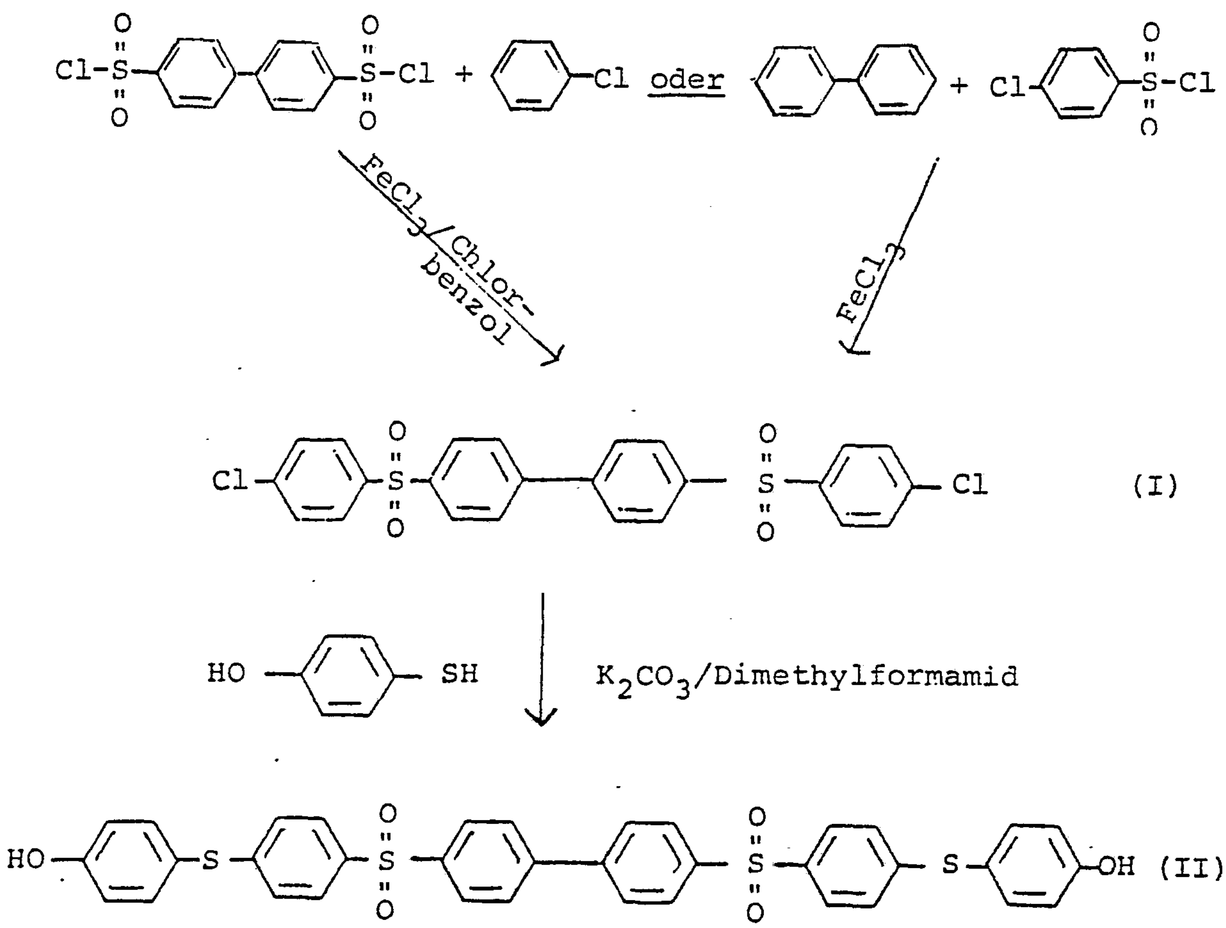


Wie im vorstehenden Reaktionsschema angedeutet, kann die 4,4'-Bis(4-chlorphenylsulfonyl)biphenyl-Vorstufe (I) der neuen Monomeren gemäß der Erfindung nach zwei Methoden hergestellt werden, nämlich
(1) durch die mit Eisen(III)-chlorid katalysierte Kondensation von 4,4'-Biphenyldisulfonyldichlorid und

Chlorbenzol, wobei das Chlorbenzol sowohl als Reaktionsteilnehmer als auch als Lösungsmittel verwendet wird, oder (2) durch die mit Eisen(III)-chlorid katalysierte Kondensation von Biphenyl und 4-Chlorbenzolsulfonylchlorid. Die hierbei erhaltene 4,4'-Bis(4-chlorphenylsulfonyl)biphenyl-Vorstufe (I) wird anschließend mit 4-Mercaptophenol in Gegenwart von Kaliumcarbonat und Dimethylformamid umgesetzt, wobei das bevorzugte Bis(4-hydroxyphenylthiophenyl)biphenyldisulfon (II) gemäß der Erfindung gebildet wird.

Die Bis(4-hydroxyphenylthiophenyl)biphenyldisulfone gemäß der Erfindung eignen sich als Monomere oder eines der Comonomeren für die Synthese beispielsweise von Polycarbonaten, Polyurethanen, Polyestern, Polysulfonen und Polyäthern.

Diese Polycarbonate können unter Verwendung der neuen Monomeren gemäß der Erfindung nach bekannten Verfahren, wie sie in den US-PSen 2 964 794, 2 970 131, 2 991 237, 2 999 835, 2 999 846, 3 028 365, 3 153 008, 3 187 065, 3 215 668 und 3 248 414 und in der Monographie von H. Schnell "Chemistry and Physics of Polycarbonates", Interscience Publishers, New York 1964, beschrieben werden, hergestellt werden.

Die Polyurethane können unter Verwendung der neuen Monomeren gemäß der Erfindung nach bekannten Verfahren, wie sie beispielsweise in den US-PSen 2 266 777, 2 284 637, 2 284 896 und 2 511 544 und in "Polyurethanes: Chemistry and Technology", Bd. 1, J.H. Saunders und K.C. Frisch, Interscience Publishers, New York 1964, beschrieben werden, hergestellt werden.

Die Polyester können unter Verwendung der neuen Monomeren nach bekannten Verfahren, wie sie beispielsweise in den US-PSen 2 980 650, 3 185 668, 3 185 670 und 3 268 482 und im Buch "Polyesters" (zwei Teile) von Norman G. Gaylord, Interscience Publishers, New York 1962, beschrieben werden, hergestellt werden.

Die Polyäther können unter Verwendung der neuen Monomeren gemäß der Erfindung nach bekannten Verfahren, wie sie beispielsweise der Erfindung nach bekannten Verfahren, wie sie beispielsweise in den US-PSen 1 922 459, 2 253 723, 2 991 313 und 3 651 151 und im Buch "Polyethers" (drei Teile) von Norman G. Gaylord, Interscience Publishers, New York 1962, beschrieben werden, hergestellt werden.

Die Erfindung betrifft außerdem neue Monomere, die allgemein als Bis(4-hydroxyphenylsulfonylphenyl)biphenyldisulfone bezeichnet werden und die Strukturformel

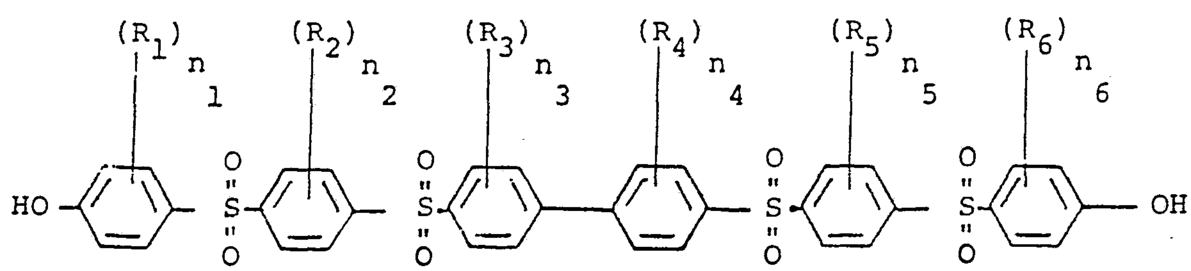

haben, worin $R_1$, $R_2$, $R_3$, $R_4$, $R_5$ und $R_6$, die gleich oder verschieden sein können, für $C_1$-$C_4$-Alkyl, Cl oder Br stehen und $n_1$, $n_2$, $n_3$, $n_4$, $n_5$ und $n_6$, die gleich oder verschieden sein können, für 0, 1 oder 2 stehen,

ein Verfahren zu ihrer Herstellung und aus diesen neuen Monomeren hergestellte Polycarbonate, Polyurethane, Polyester, Polysulfone und Polyäther.

Die Bis(4-hydroxyphenylsulfonylphenyl)biphenyldisulfone gemäß der Erfindung haben die allgemeine Strukturformel

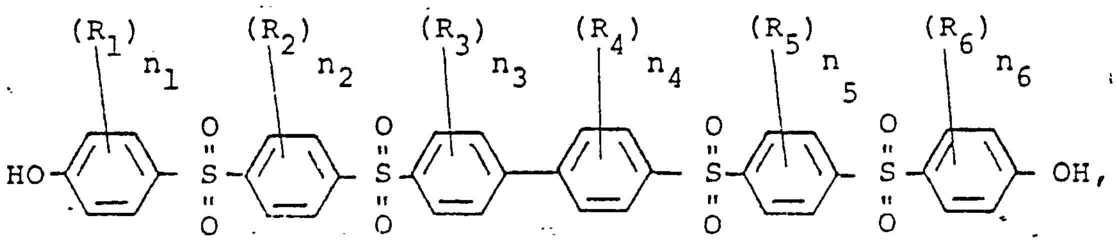

in der $R_1$, $R_2$, $R_3$, $R_4$, $R_5$ und $R_6$, die gleich oder verschieden sein können, $C_1$-$C_4$-Alkyl, Cl oder Br sind und $n_1$, $n_2$, $n_3$, $n_4$, $n_5$ und $n_6$, die gleich oder verschieden sein können, für O, 1 oder 2 stehen.

Ein geeigneter Weg zur Synthese der Bis(4-hydroxyphenylsulfonylphenyl)biphenyldisulfone der vorstehenden Gattung erfolgt über die entsprechenden Bis(4-hydroxyphenyl-thiophenyl)biphenyldisulfone, beispielsweise aus Verbindung II durch Oxydation mit Wasserstoffperoxid in Essigsäure zum bevorzugten Bis(4-hydroxyphenylsulfonyl)biphenyldisulfon (III).

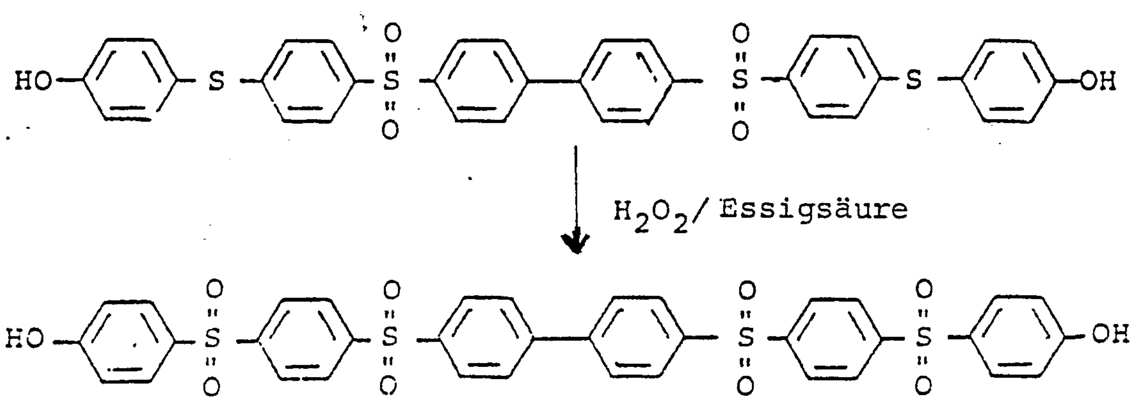

(II)

(III)

Die Bis(4-hydroxyphenylsulfonylphenyl)biphenyldisulfone gemäß der Erfindung eignen sich als Monomere oder eines der Comonomeren beispielsweise für die Synthese von Polycarbonaten, Polyurethanen, Polyestern, Polysulfonen und Polyäthern. Hierbei kann auf die bekannten Verfahren zur Herstellung von Polycarbonaten, Polyurethanen, Polyestern, Polysulfonen und Polyäthern, wie sie bereits vorstehend zur Herstellung entsprechender Polymerer aus den neuen Bis(4-hydroxyphenylthiophenyl)-biphenyldisulfonen zitiert sind, verwiesen werden.

## Beispiele

### Synthese von 4,4'-Bis(4-chlorphenylsulfonyl)biphenyl-Vorstufe (I)

Verfahren 1:

In einen 12 l-Dreihalskolben, der mit Rührer, Kühler, Thermometer, Stickstoffeintritt und -austritt (wobei der Austritt mit der Waschflasche zur Absorption des während der Reaktion entwickelten Chlorwasserstoffgases verbunden war) versehen war, wurden 7,8 l destilliertes Monochlorbenzol (MCB) und 2,268 kg 4,4'-Biphenyldisulfonyldichlorid (als "ALDI" bezeichnet, im Handel von Uniroyal, Inc., erhältlich) gegeben. Das Gemisch wurde in einer Stickstoffatmosphäre auf 70°C erhitzt, wobei das ALDI im MCB vollständig gelöst wurde. Nach Zusatz von 65 g wasserfreiem Eisen(III)-chlorid wurde das Reaktionsgemisch auf 130°C erhitzt und bei dieser Temperatur gehalten, bis die Entwicklung von Chlorwasserstoffgas aufhörte (etwa 20 Stunden). Das gelbbraune Produkt, das sich vom Reaktionsmedium abschied, wurde abfiltriert und an der Luft getrocknet, wobei 2,268 kg (Ausbeute etwa 84%) rohes Produkt erhalten wurden. Das rohe Produkt wurde aus Dimethylformamid kristallisiert, wobei weiße Kristalle (Schmelzpunkt 269 bis 272°C) erhalten wurden, die durch das Infrarotspektrum und kernmagnetische Resonanzspektrum (NMR) als 4,4'-Bis(4-chlorphenylsulfonyl)biphenyl identifiziert wurden.

Elementaranalyse - Berechnet für $C_{24}H_{16}S_2O_4Cl_2$ (Molekulargewicht 503,4)

Berechnet: 57,26% C, 3,20% H, 12,71% S, 14,11% Cl
Gefunden: 57,17% C, 3,18% H, 12,55% S, 13,90% Cl

Verfahren 2:

Zu einem Gemisch von 30,8 g Biphenyl und 95,95 g 4-Chlorbenzolsulfonylchlorid (Molverhältnis 1:2,25) wurden unter Rühren bei 70°C 6 g wasserfreies Eisen(III)-chlorid gegeben. Die Temperatur wurde in einer Stunde auf 140°C erhöht, wodurch stetige Entwicklung von Chlorwasserstoffgas bewirkt wurde. Nach ungefähr einer Stunde erstarrte das Reaktionsgemisch. Das Erhitzen wurde weitere 2 Stunden im festen Zustand fortgesetzt. Die feste Masse wurde in Dimethylformamid (DMF) gelöst. Bei Abkühlung kristallisierte 4,4'-Bis(4-chlorphenylsulfonyl)biphenyl aus. Eine zweite Reinigung aus DMF führte zu einem blaßgelben kristallinen Produkt (Schmelzpunkt 269-272°C). Nach der Reinigung wurde ein Umsatz von 45% erzielt.

Die nach dem Verfahren 1 und dem Verfahren 2 erhaltenen Produkte hatten ein identisches Infrarotspektrum, obwohl die Bildung von isomeren Produkten nach dem Verfahren 1 möglich war. Da das Reaktionsprodukt sich sehr leicht vom Reaktionsmedium abscheidet, kann es leicht abfiltriert und gereinigt werden. Von diesem Standpunkt und vom Standpunkt des höheren Umsatzes aus ist das Verfahren 1 das bevorzugte Verfahren.

Synthese von Bis(4-hydroxyphenylthiophenyl)biphenyl-disulfon (II)

In einen mit Rührer, Stickstoffeintritt und -austritt, Thermometer, Kühler und Zugabetrichter versehenen 3 l-Dreihalskolben wurden 63 g (0,5 Mol) 4-Mercaptophenol (Hersteller Crown Zellerbach), 76 g (0,55 Mol) wasserfreies Kaliumcarbonat (Granulat) und 750 ml destilliertes Dimethylformamid gegeben. Das Gemisch wurde unter einer Stickstoffatmosphäre auf 90°C erhitzt. Eine leuchtend gelbe Farbe, die auf die Bildung des Thiophenoxyanions zurückzuführen war, wurde um 60 bis 90°C beobachtet. Das Reaktionsgemisch wurde 2 Stunden bei 90°C gerührt, worauf eine Lösung von 126 g (0,25 Mol) Bis(4-chlorphenylsulfonyl)biphenyl in 300 ml warmem Dimethylformamid in 30 Minuten zugesetzt wurde. Die Intensität der leuchtend gelben Farbe wurde mit fortschreitender nucleophiler Verdrängung des Chlors durch das Thiophenoxidanion langsam schwächer. Das Reaktionsgemisch wurde 3 Stunden bei 90 bis 100°C gehalten. Es wurde zur Entfernung von Kaliumsalzen heiß filtriert. Das Filtrat wurde mit 2 l Wasser verdünnt und dann auf pH 6 angesäuert. Die weiße Fällung wurde abfiltriert und getrocknet, wobei 165 g (Ausbeute 97%) rohes Produkt erhalten wurden. Nach Kristallisation aus Eisessig ergab das rohe Produkt ein weißes pulverförmiges Material (Schmelzpunkt 235 bis 237°C), das durch das IR- und NMR-Spektrum als Bis(4-hydroxyphenylthiophenyl)biphenyldisulfon identifiziert wurde.

Elementaranalyse: Berechnet für $C_{36}H_{26}S_4O_6$
(Molekulargewicht 682,57)

| | | | |
|---|---|---|---|
| Berechnet: | 63,34% C, | 3,84% H, | 18,75% S |
| Gefunden: | 63,23% C, | 3,80% H, | 19,02% S |

Das Diacetat dieses Monomeren mit einem Schmelzpunkt von 195°C wurde als Hilfe für die weitere Charakterisierung synthetisiert. Die Analyse des Produkts ergab die folgenden Werte:

Elementaranalyse - Berechnet für $C_{40}H_{30}S_4O_8$
(Molekulargewicht 766,64)

| | | | |
|---|---|---|---|
| Berechnet: | 62,66% C, | 3,94% H, | 16,74% S |
| Gefunden: | 62,66% C, | 3,54% H, | 16,74% S |

<u>Synthese von Bis(4-hydroxyphenylsulfonylphenyl)biphenyldisulfon (III)</u>

In einen mit Rührer, Kühler und Thermometer versehenen 500 ml-Dreihalskolben wurden 16,6 g Bis(4-hydroxyphenylthiophenyl)biphenyldisulfon (II) und 200 ml 50%ige Essigsäure gegeben. Das Gemisch wurde auf 90°C erhitzt, wobei die Vorstufe (II) gelöst wurde. Dann wurden 100 ml 30%ige wäßrige Wasserstoffperoxidlösung zugesetzt. Eine weiße Fällung schied sich innerhalb von 15 Minuten nach Zugabe des Wasserstoffperoxids ab. Das Reaktionsgemisch wurde 2 Stunden bei 100°C gehalten und die weiße Fällung abfiltriert und mit Wasser gewaschen. Das hierbei erhaltene weiße pulverförmige Material (17,2 g, Ausbeute 86,8%) wurde über Nacht unter vermindertem Druck getrocknet und dann aus Dimethylformamid kristallisiert (Schmelzpunkt 290°C). Es wurde durch das Infrarot- und NMR-Spektrum als Bis(4-hydroxyphenylsulfonylphenyl)-biphenyldisulfon identifiziert.

Elementaranalyse - Berechnet für $C_{36}H_{26}S_4O_{10}$
(Molekulargewicht 746,64)

| | | | |
|---|---|---|---|
| Berechnet: | 57,91% C, | 3,51% H, | 17,14% S |
| Gefunden: | 58,08% C, | 3,58% H, | 17,04% S |

Die technische Verwendung der aus den erfindungsgemäßen Bis(4-hydroxyphenylthiophenyl)biphenyldisulfonen sowie den erfindungsgemäßen Bis(4-hydroxyphenylsulfonylphenyl)biphenyldisulfonen erhältlichen Polycarbonate, Polyurethane, Polyester, Polysulfone und Polyäther kann überall dort erfolgen, wo die entsprechenden Polymeren auf Basis von bekannten Diarylsulfonen bislang technische Verwendung finden konnten.

Patentansprüche

1. Verbindungen der Strukturformel

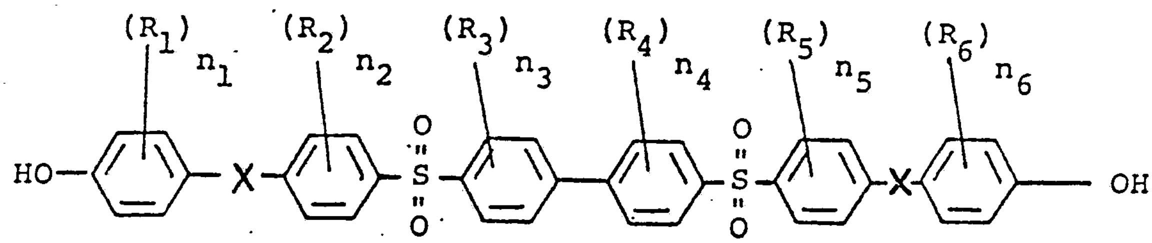

in der $R_1$, $R_2$, $R_3$, $R_4$, $R_5$ und $R_6$, die gleich oder verschieden sein können, für $C_1$-$C_4$-Alkyl, Cl oder Br stehen und $n_1$, $n_2$, $n_3$, $n_4$, $n_5$ und $n_6$, die gleich oder verschieden sein können, für 0, 1 oder 2 stehen und worin X entweder S oder $SO_2$ ist.

2. Monomeres nach Anspruch 1 mit der Strukturformel

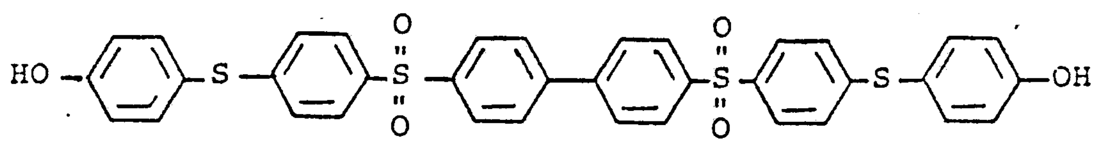

3. Monomeres nach Anspruch 1 mit der Strukturformel

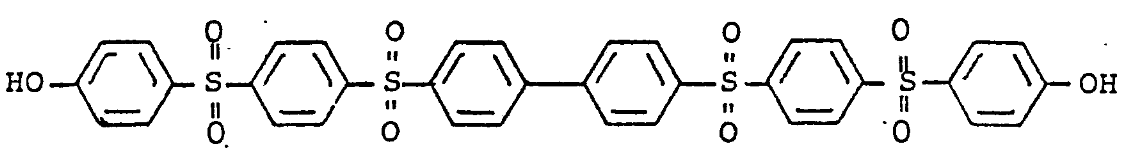

4. Verfahren zur Herstellung der Verbindung des Anspruchs 2, dadurch gekennzeichnet, daß man
   a) entweder 4,4'-Biphenyldisulfonyldichlorid und Chlorbenzol in Gegenwart von Eisen(III)-chlorid umsetzt, oder
   b) Biphenyl mit 4-Chlorbenzolsulfonylchlorid in Gegenwart von Eisen(III)-chlorid umsetzt, und das in beiden Fällen erhaltene 4,4'-Bis(4-chlorphenylsulfonyl)biphenyl in Gegenwart von 4-Mercaptophenol, Kaliumcarbonat und Dimethylformamid umsetzt.

5. Verfahren zur Herstellung der Verbindung des Anspruchs 3, dadurch gekennzeichnet, daß man Bis(4-hydroxyphenylthiophenyl)-biphenyldisulfon in Gegenwart von Essigsäure mit Wasserstoffperoxid oxydiert.

6. Verwendung der Verbindungen des Anspruchs 1 zur Herstellung von Polycarbonaten, Polyurethanen, Polyestern, Polysulfonen oder Polyäthern.

7. Verwendung der Verbindungen des Anspruchs 1 zur Herstellung von Polycarbonaten nach den bekannten Polycarbonatherstellungsverfahren in Lösung mit Phosgen oder in der Schmelze mit Diarylcarbonat.

Europäisches Patentamt

# EUROPÄISCHER RECHERCHENBERICHT

0010595

Nummer der Anmeldung

EP 79 103 331.9

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| A | DE - A1 - 2 520 317 (BAYER)<br>-- | | C 07 C 147/10<br>C 07 C 149/36<br>C 08 G 18/32<br>C 08 G 63/12<br>C 08 G 63/62<br>C 08 G 65/34<br>C 08 G 75/20 |
| A | GB - A - 1 190 135 (UNION CHIMIQUE-CHEMISCHE BEDRIJVEN)<br>---- | | |
| | | | RECHERCHIERTE SACHGEBIETE (Int. Cl.3) |
| | | | C 07 C 147/10<br>C 07 C 149/36<br>C 08 G 18/32<br>C 08 G 63/00<br>C 08 G 65/34<br>C 08 G 75/20 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Berlin | 23-01-1980 | STOOS |